**Europäisches Patentamt**

**European Patent Office**

**Office européen des brevets**

(19)

(11) Publication number : **0 604 867 A1**

(12) # EUROPEAN PATENT APPLICATION

(21) Application number : **93120504.1**

(22) Date of filing : **20.12.93**

(51) Int. Cl.⁵ : **F16F 1/00**

(30) Priority : **29.12.92 IT MI922979**

(43) Date of publication of application :
**06.07.94 Bulletin 94/27**

(84) Designated Contracting States :
**DE FR GB IT**

(71) Applicant : **VELA S.r.L.**
**Via Marco Polo, 7**
**I-20100 Milano (IT)**

(72) Inventor : **Zarotti, Claudio**
**Via Marco Polo, 7**
**I-20124 Milano (IT)**

(74) Representative : **Checcacci, Giorgio**
**PORTA, CHECCACCI & BOTTI s.r.l.**
**Viale Sabotino, 19/2**
**I-20135 Milano (IT)**

(54) **Antivibrating element.**

(57)    The antivibration element consists of a variable volume chamber containing a two-phase or multi-phase substance or mixture of substances (liquid/gas or solid/gas).

The basic characteristics of the invention are :

— the presence inside the antivibration element of elastic or damping characteristics particularly suited for insulation from low-frequency vibrations, and

— the possibility of changing the working point of the antivibration element by control of the thermodynamic state of the substances employed.

FIG.3

**EP 0 604 867 A1**

The present invention relates to an antivibration element, i.e. an element capable of providing insulation from mechanical vibrations.

Insulation from vibrations is a very widespread technical problem in industry wherever there are machines and motors with moving parts. Entirely similar is the symmetrical problem of insulation of an apparatus from the vibrations coming from the outside world and which are transmitted through the constraints of the supporting structures.

To limit transmission of vibrations there are normally used systems having both elastic and damping characteristics.

Especially critical is insulation from low-frequency vibrations since in this case, by using conventional mechanical suspensions, very low resonance frequencies would be necessary with very high static rise (on the order of one meter). To overcome these serious limitations there are usually used pneumatic suspensions (so-called air springs) characterised by very low resonance frequencies and null static rise. On the other hand suspensions of this type, depending on the applications, are characterised by some limitations, as follows:

- the need for a system for supplying compressed air (compressor, tubing, control and adjustment valves, filters, etc.);
- the need to add external components to provide damping of the vibrations (typically a supplementary chamber with orifices which provide viscous dissipation on the oscillating flow between the air spring and the chamber).

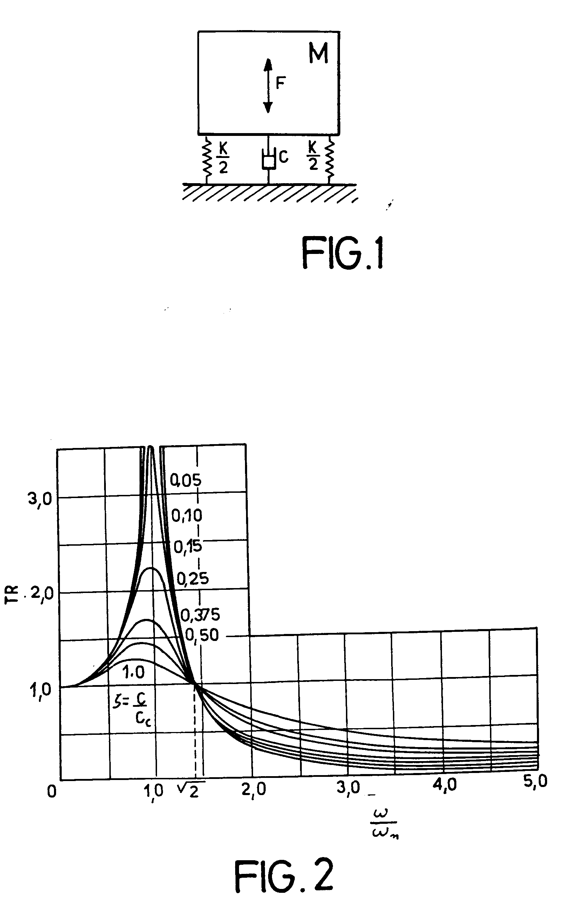

To better understand the problems underlying the invention reference is made to a mass-spring-damper system (FIG. 1) characterised by the following parameters:

- an inertia term (mass M),
- an elastic term (rigidity k of the spring), and
- an energy dissipation term (damping c of the damper).

The system is characterised by its own oscillation frequency equal to:

$$\omega = (k/M)^{0.5}$$

When the system is stressed to vibrate by a force oscillating in time its behaviour can be described through the transmissibility function (TR) equal to the ratio of the amplitude of the force transmitted through the suspension to the amplitude of the force oscillating in time. This ratio is a function of the frequency of the force oscillating in time.

In particular, from the- behaviour of transmissibility as a function of the ratio of the frequency of the force oscillating in time to the system's own frequency (FIG. 2) it can be observed that insulation from vibrations (corresponding by definition to TR < 1) occurs only for the following ratio of frequencies:

$$\omega \backslash \omega_n > \sqrt{2}$$

regardless of damping value. In FIG. 2 the different transmissibility curves are characterised by the parameter:

$$z = c/c_c$$

where $c_c$ is critical damping, i.e. the damping for which the system no longer has oscillating behaviour.

At the frequencies for which TR < 1 a system consisting only of a spring is better than a spring-damper system in reducing transmissibility. It is however useful to have recourse to a certain amount of damping when the system must pass through the resonance frequency to limit the amplitude of the oscillations and of the resulting stresses.

Depending on the physical system employed, the damping can have different operating characteristics. By using a diagram of concentrated parameters substantially five basic models can be identified:

- viscous: laminar flow of a fluid through an orifice,
- coulombic: friction between two solid bodies,
- quadratic: turbulent flow of a fluid through an orifice,
- nth power of speed: generalised model (e.g. 1<n<2 corresponds to a liquid oscillating in U pipes),
- with hysteresis: internal friction of solid materials.

The problem underlying the present invention is to make available an antivibration element which would have optimal behaviour at both low and high frequencies.

To solve this problem the present invention provides damping by means of physical principles different from those listed and at present not used in engineering.

Therefore the present invention relates in a first aspect to an antivibration element comprising a variable volume chamber and at least one operating substance in aeriform phase contained in said chamber and is characterised in that it comprises at least one second substantially incompressible phase of said operating substance and said second phase being the same substance in the liquid state and/or solid state and/or vapour state adsorbed on a suitable support.

A compressible aeriform phase (steam and optionally gas in multicomponent mixtures) provides the elastic function of the antivibration element in full analogy with pneumatic antivibration elements (air springs).

The presence of a substantially incompressible phase (meaning a phase in which compressibility is several orders of magnitude less than aeriform phase compressibility) of said operating substance in aeriform phase with the possibility of providing exchanges of mass and energy between the phases allows provision of the damping function.

In a second aspect the present invention relates to a method for damping mechanical vibrations characterised in that it dissipates energy in phase changes of an operating substance contained in a variable volume chamber.

The dynamic response of a two-phase or three-phase system whether single-component or multicomponent is extremely complex because in general there can occur phenomena of partial thermodynamic unbalance which also depend on the ratio of mass between the phases and the spatial distribution of said phases.

Although the physical mechanisms are naturally not part of the invention it is considered appropriate to explain below the phenomena correlated with the operation of the invention. It is pointed out that said explanation is considered only probable, it not being possible to formulate absolutely certain hypotheses for the physical mechanisms involved.

For the sake of expository simplicity and without limiting the general nature of the invention reference is made to a two-phase single-component system. Depending on the amplitude and frequency of the disturbance, it is believed that it would be possible to adopt different models to describe the behaviour of the system. At the two ends of the spectrum there can be used specifically:

- a thermodynamic equilibrium model and in this case it is assumed that between the two phases the exchanges of heat and mass take place momentarily, i.e. with characteristic times less than the characteristic time of the disturbances;
- fully thermodynamic imbalance model: in this case it is assumed that between the two phases the mass and heat exchanges are prevented (characteristic times greater than the characteristic time of the disturbance); the two phases are in fact frozen and separately undergo isoentropic transformations.

Between the two extreme situations of full equilibrium and full imbalance corresponding to idealisations of the system response, it is believed that there occur partial equilibrium situations.

The main difference between the limit situations idealised and the more realistic representation of partial equilibrium is the probable presence in the latter case of nonisoentropic dissipation phenomena. It is believed that these phenomena originate a damping term in the response of the antivibration element of the present invention.

The most immediate manifestation of the thermodynamic imbalance is the creation of temperature differences between the vapour and liquid phases with vapour undercooling phenomena and liquid overheating phenomena. If imbalance is not perfect (phases not frozen), under this temperature difference there can take place heat transmission between the phases which, because of the restrictedness of the temperature difference, leads to entropy production in the system (irreversible transformation). Upon entropy production there follows energy dissipation which takes place at the expense of the kinetic energy associated with the force oscillating in time.

To summarise, behaviour of the antivibration element will be essentially of the following types:
- elastic: with disturbances which are very fast (high frequencies) and limited (small oscillation amplitudes) the system tends to behave according to the perfect thermodynamic imbalance model. In this case the vapour phase, for sufficiently low pressures, will tend to behave like a perfect gas. The system will behave consequently like an air spring in whose response is present only the elastic term. The compression-expansion transformations are isoentropic, to which corresponds a conservative elastic force.
- elastic with damping: in case of slow (low frequency) disturbances with relatively high amplitudes (with resonances) the behaviour tends towards partial imbalance with the appearance of a damping term in the response.

It has been verified that the physical mechanisms described can be appropriately controlled through the extension and morphology of the interface between the phases by utilising appropriate solid surfaces.

A physical phenomenon which is different but in some ways analogous for the purposes of the present invention is that of adsorption of vapours on suitable solid supports termed adsorbents. This term indicates the phenomenon in which the molecules of an aeriform (gas or vapour) are deposited in one or more layers on the surface of a solid.

Phenomena of physical adsorption of vapours on solids are characterised by finite kinetics and hysteresis phenomena (the difference between adsorption and desorption) which can be profitably utilised to secure dissipation of the mechanical energy of the vibrations while integrating the damping function provided by the phase transitions. In physical adsorption the forces acting between the molecules of the fluid and between the fluid and the solid surface are the non-specific type (van der Waals) and consequently the phenomena display close analogies, even quantitative, with condensation phenomenon. Based on thermodynamic considerations (decrease of entropy and of free energy of the system) it can be shown that all the adsorption processes are exothermic. Reaction heat is very similar to vapour condensation heat. In qualitative terms physical adsorption consists of formation of a weak link between gas and solid molecules. Under thermodynamic equilibrium conditions the surface of the solid can be covered in a more or less extensive manner by a monomolecular gas layer. In some cases the formation of multiple molecular layers is also possible.

Adsorption is present in a more or less significant manner for each solid/aeriform pair. Here the interest is in materials with high volume adsorption capacity. Since this is an essentially surface phenomenon, that requirement can be met by materials having high microporosity such as active carbons and molecular sieves. As concerns aeriform substances, it can be observed that gases above the critical temperature are adsorbed generally in small quantities while for vapours (gases below critical temperature) adsorption is greater in direct proportion to their molecular weight. Consequently choice of fluids and solids allows control of adsorption and desorption processes adapting them to specific requirements of resonance frequency of the particular application of the antivibration device.

The quantity of gas or vapour adsorbed depends on pressure and temperature. The common representation of this dependence is to define adsorption isotherms from which it is seen that the quantity of gas adsorbed increases with pressure for the same temperature. For the purposes of the present application the pressure oscillation resulting from mechanical vibration causes alternating phenomena of adsorption and desorption analogous to the phenomena mentioned above of phase transition (condensation, evaporation or sublimation).

The processes under scrutiny are relatively fast. On the other hand, since it is a matter of diffusion phenomena, the characteristic times of the transformations are not null and, for specific gas/solid combinations, are of the same order of magnitude as the low-frequency vibrations of interest for the present invention. With this property is associated the basic aspect that the adsorption/desorption transformations are characterised by hysteresis and consequently energy dissipation. These combined effects involve the possibility of damping the vibrations in specific frequency ranges.

For the above reasons and for the purposes of the present invention it is believed therefore that a vapour adsorbed on a solid constitutes a phase different from the vapour itself and substantially incompressible as compared with the vapour. In the same manner passage from the free vapour condition i.e. de-adsorbed to the condition of adsorbed vapour and vice versa is considered a phase change.

In conclusion, the physical mechanisms underlying the present invention allow provision of extremely functional antivibration devices and with flexible adaptation to different applications because it is possible to introduce the damping function only where required (traversing of the critical frequencies) or select through the materials employed the range of frequencies where the damping function should be active.

The variable volume chamber can contain either a single substance in two-phase conditions or a substance in multiphase conditions or multiple substances at least one of which is present in at least two phases.

It is clear that the presence of multiple phases applies to all the various operating situations which follow each other during vibration absorption. Indeed, there being provided exchanges of mass between the phases, it is possible that there will be in some instances a single phase. Such limit situations however correspond either to peaks of oscillation during the antivibration operation or to abnormal static conditions in which there is no antivibration action.

Operation of the antivibration element can be exclusively passive. In this case the elastic and damping characteristics depend on the choice of the operating substance.

As an alternative, the chamber can be provided with heating and/or cooling means to control the thermodynamic conditions of the operating substance.

To clarify the explanation of the innovative principles of the present invention and its advantages compared with the known art there is described below with the aid of the annexed drawings a possible embodiment thereof by way of nonlimiting example applying said principles. In the drawings -

FIG. 1 a shows diagram of the principle of an antivibration system,

FIG. 2 is a chart showing the behaviour of transmissibility as a function of the dimensionless frequency of the force oscillating in time compared with the system's own frequency,

FIG. 3 shows an antivibration element in accordance with the present invention,

FIG. 4 shows a test system, and

FIGS. 5 and 6 are charts showing the frequency response in module and phase of the test system of FIG. 4.

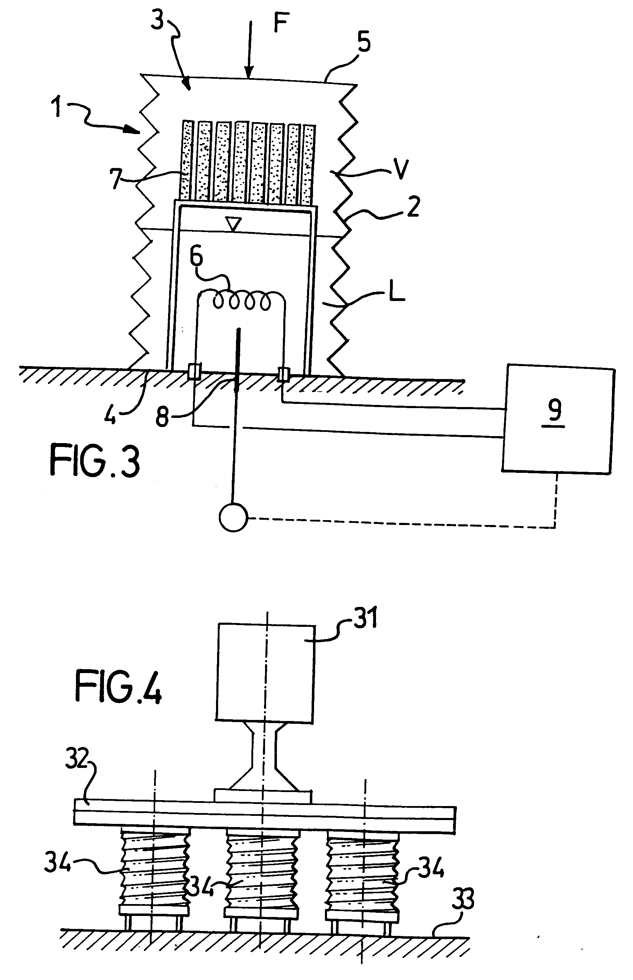

With reference to the figures FIG. 3 shows an antivibration element 1 comprising a bellows 2 of metal or polymers depending on load conditions and enclosing a variable-volume chamber 3 in which is contained an operating substance.

The bellows 2 comprises two closing flanges 4 and 5 which allow coupling of the antivibration element 1 with the suspended structure and the surrounding environment.

The operating substance is preferably water but with possible variations depending on the specific applications such as mixtures of low boiling point fluids, mixtures with gases, and gas & solid mixtures. In the example are present two phases, liquid L and vapour V.

The antivibration element 1 comprises a temperature control device consisting of heating and/or cooling means 6 to maintain two-phase system conditions regardless of external surrounding conditions and to control pressure and vapour ratio.

The heating means 6 permit variation of the elastic characteristics of the system, i.e. rigidity and own frequency.

To facilitate maintenance of the two-phase conditions the chosen operating substance (water) has a liquid/vapour equilibrium temperature at operating pressure higher than surrounding temperature. This permits maintenance of two-phase system conditions merely by applying heat. It is therefore not necessary to employ cooling means which are more complex and costly than heating means. In this case therefore the means 6 consist of an electrical resistance preferably inserted in the chamber 3 in such a manner as to remain immersed in the vapour phase V.

Inside the chamber 3 are preferably provided means 7 for aiding the change of state. Said means can comprise either surfaces which facilitate formation of drops and hence vapour condensation or bodies with high adsorption capacity for vapour V.

The antivibration element 1 also comprises a transducer 8 for temperature measurement provided e.g. by means of a thermocouple immersed in the liquid phase L. The measurement performed is used to control the power delivered to the resistance 6.

The antivibration element 1 comprises also an electronic unit 9 for regulation and control whose circuit diagram is not shown because it is not included in the subject matter of the present invention. The unit 9 contains a microprocessor in which are memorised the temperature/pressure curves of the operating substance and controls the power delivered by the heating and/or cooling means 6 to maintain the required operating conditions.

The antivibration element 1 is normally placed between the suspended system which generates an axial load F and the surrounding environment. The interposition can take place directly on the flanges 4 and 5 or transmission mechanisms can be used.

Under static conditions the load F is compensated by the combined action of the elastic reaction of the bellows 2 and the internal pressure of the vapour V. This pressure depends on the operating substance used and the thermal power supplied or subtracted through the heating or cooling means 6. Thermal power is controlled on the basis of the temperature measured by the thermocouple 8 to hold steady the pressure inside the chamber 3. For this purpose use is made of the circumstance that the system is isothermobaric and consequently temperature and pressure are linked univocally in both directions. In this manner the information essential for control of the device - pressure - is deduced from a measurement obtainable more easily and at low cost such as temperature (measurable with a simple thermocouple). In case of the presence of uncondensable gases or multiple unmixable fluids pressure control is performed directly with a special transducer. Indeed, in this case the presence of the uncondensable gas prevents deduction of the pressure information from temperature measurement and it is therefore necessary to use a pressure transducer even though it is more costly than a thermocouple.

Under dynamic conditions the pressure oscillations caused by the vibration transmitted to the device cause mass and energy exchanges between the phases. The exchange mechanisms are appropriately controlled to obtain the desired damping characteristics through the type and morphology of the surfaces in contact with the vapour phase.

The operating characteristics of the antivibration device were verified experimentally by the test system shown in FIG. 4.

In this system a vibration generator 31 capable of generating an oscillating force adjustable in frequency and amplitude was placed over a steel plate 32 in turn resting on a rigid surface through three bellows 34 similar to the bellows 2 and arranged symmetrically. The suspended structure thus includes the vibration generator 31 and the plate 32.

In the tests performed the bellows 34 were filled initially with air at a pressure of 250kPa(a) thus providing an elastic suspension with only a moderate damping effect due to the metal structure of the bellows 34.

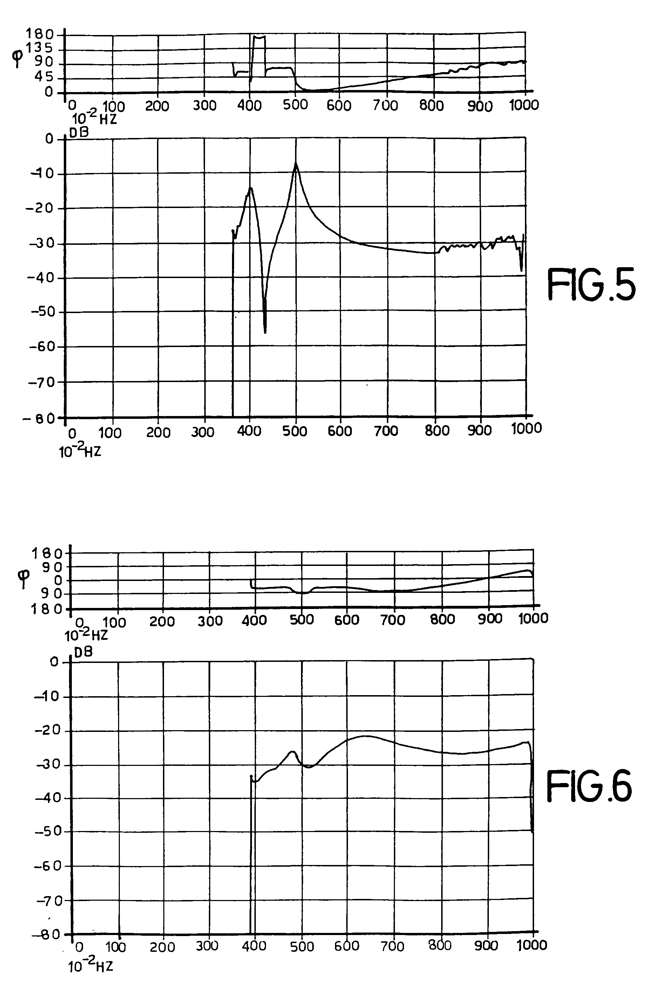

By means of the vibration generator 31 there were imparted vibrations of progressively increasing frequency while measuring the ratio of acceleration of the plate 32 and the applied force for changing frequency. The chart created is shown in FIG. 5. For convenience of representation of the experimental data on the abscissa is shown the frequency of the force oscillating in time while on the ordinate is shown the ratio expressed in decibels of the force imparted by the vibration generator 31 to the acceleration of the suspended mass. There can be seen two very accented peaks corresponding to the resonance frequencies of the system and a progressive attenuation toward the high frequencies.

Then the bellows 34 were filled with a two-phase fluid consisting of a liquid in the presence of its saturated vapour again at a pressure of 250kPa(a). In particular a low boiling point hydrofluorocarbide-based fluid having a vaporization temperature at 250 kPa(a) of approximately 50°C was used. The resulting chart is shown in FIG. 6.

In comparing the charts of FIGS. 5 and 6 there is seen a significant lowering of the peaks at the resonance frequencies which indicates strong damping. However this damping is no longer found at the higher frequencies where the two charts are very similar.

The invention allows obtaining a series of important advantages and in particular compared with pneumatic antivibration systems.

A first advantage consists of the capability of changing the elastic characteristics of the antivibration element during operation. These elastic characteristics depend indeed on the combination of the elastic characteristics of the bellows and the vapour pressure. By varying the thermal power supplied to the antivibration element it is in general possible to vary the operating pressure and hence the elastic characteristic of the device.

A peculiar characteristic of the preferred embodiment is fully electrical operation control. Compared with pneumatic antivibration devices this permits reduction of costs and simplification of the system.

Indeed it is unnecessary to have an air compression and distribution system whose system and operating costs (energy consumed and maintenance) are high.

Power supply of the antivibration element of the present invention is limited to an electric energy source easily and economically available.

In addition the absence of vibrations and noise induced by the air compression and distribution system is appreciable.

An element in accordance with the present invention allows furthermore to provide a passive safety function in case of loss of electrical control by using an uncondensable gas under pressure mixed with the operating substance which may be either two-phase or multiphase. For example, in case of normal operation at a temperature above surrounding temperature with thermal power supply by electric current dissipation by Joule effect as a result of power failure, the vapour phase of the operating substance can condense almost completely and thus exercise insufficient pressure. In this case the device retains a reduced vibration insulation function due to the presence of compressed gas.

Industrial applications of the present invention are innumerable and include the following:
- attenuation of the vibrations produced by diesel engine and compressor units for air conditioning plants mounted on roofs or in the basements of buildings,
- construction of antiseismic buildings,
- intelligent electric suspensions for motor vehicles,
- attenuation of the vibrations produced by machine tools and production machinery in general,
- protection of measuring machines from vibrations, and

special packing for delicate or dangerous transportation.

**Claims**

1. Antivibration element comprising a variable-volume chamber and at least one operating substance in aeriform phase contained in the chamber and characterised in that it comprises at least one second substantially incompressible phase of the same operating substance and said second phase being the same substance in liquid state and/or solid state and/vapour state adsorbed on a suitable support.

2. Element in accordance with claim 1 in which the operating substance is a two-phase fluid consisting of a liquid and its saturated vapour.

3. Element in accordance with claim 1 in which the operating substance is present in more than two phases.

4. Element in accordance with claim 1 in which the operating substance is a two-phase system consisting of a solid and its saturated vapour.

5. Element in accordance with claim 1 comprising a complex thermodynamic system consisting of multiple phases of a plurality of substances.

6. Element in accordance with claim 1 in which the operating substance is a vapour whose second incompressible phase consists of the same vapour adsorbed on a suitable support.

7. Element in accordance with claim 2 comprising in the chamber a support on which the vapour can be adsorbed.

8. Element in accordance with claim 1 in which the chamber is provided with heating and/or cooling means to control the thermodynamic conditions of the operating substance.

9. Element in accordance with claim 1 in which the operating substance is water.

10. Element in accordance with claim 1 in which the chamber is provided by means of a sealed metal bellows.

11. Element in accordance with claim 1 in which the chamber is provided by means of a sealed deformable bladder.

12. Element in accordance with claim 1 in comprising means for taking the pressure and/or temperature inside the chamber.

13. Method for mechanical vibration damping characterised in that it dissipates energy in phases changes of an operating substance contained in a variable volume chamber.

14. Method in accordance with claim 13 in which the phase change is a vapour-to-liquid passage and vice versa.

15. Method in accordance with claim 13 in which the phase change is a vapour-to-solid passage and vice versa.

16. Method in accordance with claim 13 in which the phase change is a passage of vapour from the free state to the adsorbed state on a a suitable support and vice versa.

17. Method in accordance with claim 13 in which the amount of the damping is varied by varying the temperature of the operating substance.

FIG.1

FIG.2

FIG.3

FIG.4

FIG.5

FIG.6

| European Patent Office | EUROPEAN SEARCH REPORT | Application Number EP 93 12 0504 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X Y <br> A | US-A-4 535 977 (PACCAR) <br> * column 2, line 26 - column 3, line 37; figure 2 * <br> * abstract * | 1,13 <br> 2,6,7, 14,16 <br> 4,15 | F16F15/02 <br> F16F9/46 <br> F16F9/06 |
| Y <br><br> A | US-A-4 646 884 (PACIFIC SCIENTIFIC CO.) <br><br> * column 2, line 31 - column 3, line 17; figures * | 2,6,7, 14,16 <br> 1,13 | |
| X <br> A | FR-A-2 558 231 (BARRY WRIGHT CORP.) <br> * the whole document * | 13,14,17 <br> 1,2,12 | |
| X | PATENT ABSTRACTS OF JAPAN <br> vol. 8, no. 54 (M-282)10 March 1984 <br> & JP-A-58 207 540 (NISSAN JIDOSHA) 3 December 1983 <br> * abstract * | 1,2,6,7, 13,14 | |
| X <br> A | GB-A-2 101 268 (STABILUS) <br> * page 1, line 40 - line 114; figure * | 13,14 <br> 1,2 | TECHNICAL FIELDS SEARCHED (Int.Cl.5) |
| X <br><br><br> A | PATENT ABSTRACTS OF JAPAN <br> vol. 7, no. 187 (M-236)16 August 1983 <br> & JP-A-58 088 240 (NISSAN JIDOSHA) 26 May 1983 <br> * abstract * | 13,14 <br><br><br> 1,2,5 | F16F <br> B60G |
| X <br><br><br> A | PATENT ABSTRACTS OF JAPAN <br> vol. 8, no. 76 (M-288)9 April 1984 <br> & JP-A-58 221 028 (NISSAN JIDOSHA) 22 December 1983 <br> * abstract * | 13,14 <br><br><br> 1,2,8, 12,17 | |
| A | DE-A-35 02 479 (CONTINENTAL GUMMIWERKE) <br><br> * the whole document * | 1,2,5-7, 13,14,16 | |

-/--

The present search report has been drawn up for all claims

| Place of search | Date of completion of the search | Examiner |
|---|---|---|
| THE HAGUE | 14 April 1994 | Tsitsilonis, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 93 12 0504

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | DATABASE WPI<br>Week 8203,<br>Derwent Publications Ltd., London, GB;<br>AN 82-A6540E<br>& SU-A-819 444 (KAFITIN) 10 April 1981<br>* abstract *<br>--- | | |
| A | DATABASE WPI<br>Week 8315,<br>Derwent Publications Ltd., London, GB;<br>AN 83-F0592K<br>& SU-A-934 074 (SAVIN E.I.) 7 June 1982<br>* abstract *<br>--- | | |
| A | WO-A-88 00535 (GKN TECHNOLOGY LTD)<br><br>* abstract; figure *<br>* page 9, line 21 - page 10 *<br>--- | 1,2,5,8,<br>13,14,17 | |
| A | DE-A-35 02 480 (CONTINENTAL GUMMI-WERKE)<br>--- | | TECHNICAL FIELDS SEARCHED (Int.Cl.5) |
| A | DE-A-29 42 029 (K.LOCHNER)<br>----- | | |

The present search report has been drawn up for all claims

| Place of search | Date of completion of the search | Examiner |
|---|---|---|
| THE HAGUE | 14 April 1994 | Tsitsilonis, L |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)